# DEMANDE DE BREVET EUROPEEN

(11) **EP 2 311 924 A1**
(43) Date de publication de la demande: **20.04.2011**
(21) Numéro de dépôt: 10187253.9
(22) Date de dépôt: 12.10.2010
(51) Int. Cl.: C10L 5/44, C10L 11/04

(54) **Composition combustible, en particulier pour l'allumage de matières combustibles, allume-feu présentant une telle composition et procédé de fabrication d'une telle composition**

(30) Priorité: 16.10.2009 FR 0904964
(71) Demandeur: POP'IN, 44780 Missillac (FR)
(72) Inventeur: Simon, Christian, 44160 Pontchateau (FR); Simon, Steven, 44160, Ste Anne sur Brivet (FR); Simon, Samuelle, 44160 Pontchateau (FR)
(74) Mandataire: Godineau, Valérie

(57) **Abrégé**

L'invention concerne une composition combustible, en particulier pour l'allumage de matières combustibles.

Cette composition est **caractérisée en ce que** ladite composition comprend au moins une cire végétale formée majoritairement d'huile hydrogénée d'au moins un végétal et au moins une plante herbacée à métabolisme photosynthétique en C₄ de la famille des Poaceae sous forme hachée.

## Description

La présente invention concerne une composition combustible, en particulier pour l'allumage de matières combustibles, un allume-feu présentant une telle composition et un procédé de fabrication d'une telle composition.

Les compositions combustibles traditionnelles pour la réalisation d'allume-feu comprennent généralement des sciures ou copeaux de bois mélangés à de la paraffine.

Le procédé de fabrication nécessite d'une part, de sécher les sciures ou copeaux pour obtenir un taux d'humidité inférieur à 8 % avant introduction dans ledit mélange, d'autre part, soit de procéder à une compression à une pression élevée, soit de chauffer la paraffine pour permettre un assemblage sciures/paraffine, étant entendu que la concentration en sciures ou copeaux ne peut généralement pas excéder plus de 40 % en poids du poids total de la composition. Ces opérations de séchage et de chauffage par compression induisent un coût de fabrication relativement élevé de la composition. Dans de telles compositions, les sciures et/ou les copeaux introduits sont fréquemment formés par des déchets de processus industriel. Ces déchets sont donc pollués par les traitements qu'ils ont dû subir. De même, la paraffine peut provenir d'origines diverses et variées, en particulier d'hydrocarbures. En tout état de cause, la traçabilité est généralement difficile à réaliser en ce qui concerne les matières premières. Dans ces conditions, l'ingestion accidentelle, en particulier par un enfant, d'une telle composition est particulièrement dangereuse et risque d'induire des troubles digestifs et pulmonaires dus au traitement des sciures, copeaux ou paraffines.

Par ailleurs, les conditions de fabrication obligent à une présentation finale sous forme de tablettes, cylindres, bâtonnets qui, à nouveau, en cas d'ingestion accidentelle, par un enfant, induit un risque de fausse route élevé.

Enfin, le pouvoir calorifique inférieur (PCI) d'une telle composition de l'ordre de 3300 KWH/tonne est aujourd'hui jugé insuffisant, en particulier dans le cas d'une application à la fabrication d'allume-feu.

Il est également connu des compositions combustibles comprenant au moins une plante herbacée et un tourteau comme l'illustrent les documents GB-2.450.155 et DE-20 2006 014656. Il convient de rappeler que le tourteau est formé du résidu du pressage du végétal, pressage qui permet d'extraire l'huile du végétal. L'utilisation d'un tourteau ne permet pas d'obtenir une température d'inflammation suffisamment basse pour une application à un allume-feu. Elle ne permet pas non plus une malléabilité de la composition obtenue.

Un but de la présente invention est donc de proposer une composition combustible aisément malléable, utilisable comme allume-feu grâce à sa température d'inflammation, non toxique et qui, en cas d'ingestion accidentelle, ne présente aucun risque digestif et pulmonaire.

Un autre but de la présente invention est de proposer une composition combustible dont la conception permet la mise en place aisée d'une traçabilité de ses constituants.

Un autre but de la présente invention est de proposer une composition combustible dont la conception permet de réduire un risque de fausse route en cas d'ingestion accidentelle, en particulier par un enfant.

Un autre but de la présente invention est de proposer une composition combustible dont le pouvoir calorifique inférieur (PCI) est supérieur aux compositions combustibles traditionnelles.

Un autre but de la présente invention est de proposer une composition combustible dont le procédé de fabrication est simple à mettre en oeuvre, en particulier à température ambiante.

A cet effet, l'invention a pour objet une composition combustible, en particulier pour l'allumage de matières combustibles, ladite composition comprenant au moins une plante herbacée à métabolisme photosynthétique en C₄ de la famille des Poaceae sous forme hachée, caractérisée en ce que ladite composition comprend en outre au moins une cire végétale formée majoritairement d'huile hydrogénée d'au moins un végétal.

Par cire végétale formée majoritairement d'huile hydrogénée d'au moins un végétal, on entend une cire comprenant au moins 50 %, de préférence au moins 90 %, de préférence encore 100 %, exprimé en pourcentage en poids rapporté au poids total de la cire, d'huile hydrogénée d'un même végétal ou d'une pluralité de végétaux. En effet, l'huile hydrogénée, c'est-à-dire ayant été soumise à une hydrogénation, peut être une huile d'un seul et même végétal ou un mélange d'huiles issues chacune d'un végétal.

Il est à noter que le terme "haché" peut s'appliquer indifféremment à un hachage grossier ou au contraire très fin. Le hachage réalisé est généralement du type de celui pratiqué par le hacheur à couteaux d'une ensileuse.

Grâce à l'utilisation de plantes vivaces à métabolisme photosynthétique en C₄, c'est-à-dire dont la photosynthèse est basée sur la production de molécules à 4 atomes de carbone, il en résulte un pouvoir calorifique inférieur plus élevé que dans les compositions combustibles traditionnelles, ce pouvoir calorifique inférieur (PCI) étant voisin de 4500 KWH/tonne.

En outre l'utilisation de plantes vivaces et de cire végétale permet de garantir de manière certaine l'origine des produits et leur absence de pollution pouvant résulter de traitement chimique ou autres lors de processus industriel.

Enfin, de telles plantes présentent un bilan carbone positif et non pas équilibré comme le bois par exemple. En d'autres termes, ces plantes émettent moins de dioxyde de carbone CO₂ lors de leur combustion qu'elles n'en ont emmagasiné lors de leur pousse.

L'utilisation de cire végétale sous forme d'huile hydrogénée permet d'élever le point de fusion de la composition la rendant stable pour son allumage.

De préférence, la ou au moins l'une des plante(s) herbacée(s) à métabolisme photosynthétique en C₄ de la famille des Poaceae de ladite composition est une plante de la sous-famille des Panicoidecie de la tribu des Andropogoneae ou de la tribu des Paniceae, de préférence choisie dans le groupe des plantes formé par le genre Panicum, tel que le switchgrass encore appelé panic érigé (Panicum virgatum), le genre Miscanthus, tel que l'espèce Miscanthus sinensis variété giganteus et le genre Pennisetum, tel que le Pennisetum purpureum (herbe à éléphant).

De telles plantes qui se satisfont pour leur développement de l'eau de pluie ne subissent en outre aucun traitement herbicide, fongicide et/ou insecticide.

De préférence, la cire végétale formée majoritairement d'huile hydrogénée de végétal est une cire à base d'au moins un végétal choisi dans le groupe formé par le soja, le colza, le tournesol, les végétaux de la famille des Palmae et est, de préférence, de la cire de palme.

De préférence encore, la cire végétale formée majoritairement de l'huile hydrogénée d'au moins un végétal et la ou les plante(s) herbacée(s) à métabolisme photosynthétique en C₄ de la famille des Poaceae représentent, exprimé en pourcentage en poids rapporté au poids total de la composition, au moins 60 %, de préférence au moins 90 %, de préférence encore 100 % de ladite composition.

De préférence encore, la composition combustible se présente sous forme de granulés de dimension de préférence comprise entre 3 et 12 mm, de préférence voisine de 10 mm.

Cette présentation présente un grand nombre d'avantages, en particulier dans le cas d'une application à un allume-feu. En effet, le granulé offre une grande surface d'oxygénation du feu et une grande surface d'inflammation favorisant une combustion rapide et complète avec un effet de mèche dû aux fibres. En outre, avec de tels granulés, il n'y a pas de possibilité de se brûler car le granulé est trop petit pour être allumé seul. La préconisation est donc de déposer un ou plusieurs tas de granulés, d'y poser une allumette ou d'enflammer avec un briquet et de laisser agir contrairement aux allume-feux traditionnels que l'on tient dans la main pour les allumer. Enfin, si accidentellement, un enfant venait à mettre à la bouche un granulé, il ne court aucun risque d'étouffement ou d'intoxication.

L'invention a encore pour objet un allume-feu se présentant sous forme d'un corps solide, caractérisé en ce que ledit corps comporte une composition du type précité.

L'invention a encore pour objet un procédé de fabrication d'une composition combustible du type précité, notamment pour la réalisation d'un allume-feu, caractérisé en ce qu'il comprend une étape de mélange de plante herbacée à métabolisme photosynthétique en C₄ de la famille des Poaceae sous forme hachée avec au moins de la cire végétale formée majoritairement d'huile hydrogénée d'au moins un végétal et une étape de conformation par compression, de préférence sous forme de granulés, du mélange obtenu.

La mise en forme sous forme de granulés peut être une étape de formage intermédiaire suivie d'une étape de conformation finale par exemple sous forme de cubes. En d'autres termes, l'étape de conformation par compression sous forme de granulés peut être suivie d'une étape d'amalgame des granulés pour obtenir la forme finale souhaitée telle qu'un cube, une plaquette sécable, une bûche ou autre.

La mise en oeuvre du procédé peut s'opérer à froid, c'est-à-dire en particulier à température ambiante du fait des qualités de malléabilité de la cire. En outre, cette mise en oeuvre ne nécessite pas une pression de forte puissance. Il en résulte un procédé de fabrication économique.

L'invention sera bien comprise à la lecture de la description suivante d'un exemple de réalisation.

Comme mentionné ci-dessus, l'invention a pour objet une composition combustible, plus particulièrement destinée à être utilisée comme allume-feu.

De manière caractéristique à l'invention, cette composition comprend au moins une cire végétale formée majoritairement d'huile hydrogénée de végétal et au moins une plante herbacée à métabolisme photosynthétique en C₄ de la famille des Poaceae.

La ou au moins l'une des plante(s) herbacée(s) à métabolisme photosynthétique en C₄ de la famille des Poaceae de ladite composition est une plante de la sous-famille des Panicoideae et de la tribu des Andropogoneae ou de la tribu des Paniceae.

Cette plante est de préférence choisie dans le groupe des plantes formé par le genre Panicum, le genre Miscanthus de la tribu des Andropogoneae et le genre Pennisetum de la tribu des Paniceae.

De préférence, la ou au moins l'une des plantes de ladite composition est, en particulier au moins une plante choisie dans le groupe formé par le switch grass ou le Miscanthus Sinensis encore appelé roseau de Chine ou le Miscanthus Giganteus, hybride résultant du croisement de Miscanthus Sinensis et Miscanthus Sacchariflorus ou l'herbe à éléphant, encore appelée Pennisetum purpureum. Toutes ces plantes ont pour caractéristique d'être des cultures non alimentaires utilisées comme fourrage ou litière. Ce sont des plantes annuelles poussant à partir de rhizomes ne nécessitant aucun traitement herbicide, fongicide, insecticide, ni engrais ou arrosage artificiel. La composition est formée au moins d'une plante ou d'un mélange de plantes du type précité. De préférence, elle est formée exclusivement d'une plante ou d'un mélange de plantes du type précité à l'exclusion de plantes d'une autre famille.

De préférence, les plantes herbacées à métabolisme photosynthétique en C₄ de la famille des Poaceae se présentent sous forme de morceaux comportant un diamètre de préférence compris entre 0,5 et 10 mm et une longueur de préférence comprise entre 1 et 50 mm.

L'utilisation sous forme de morceaux issus d'une opération de hachage et non de sciure évite la formation de poussière.

En ce qui concerne le genre Miscanthus, sa récolte se fait de février à avril. Il se ramasse à sec avec 12 % d'humidité avec les mêmes outils que ceux nécessaires à la récolte du maïs et est haché à la manière d'un maïs utilisé pour l'ensilage à l'aide d'une ensileuse par exemple. On utilise la tige principale de la plante pour la récolte. Les feuilles sont laissées sur place comme support pour la saison future et suffisent à empêcher la levée d'adventices. La tige est hachée mais pas broyée au point d'être réduite en sciures pour ne pas générer de poussière. Les morceaux de Miscanthus obtenus laissent apparaître la pulpe qui a pour propriété un fort pouvoir absorbant que l'on utilisera pour y faire adhérer la cire, permettant une parfaite homogénéisation des deux produits sans autres additifs. On obtient donc un haché de Miscanthus principalement composé de fibres végétales, non nocif par ingestion.

La cire végétale est formée majoritairement d'huile hydrogénée d'au moins un végétal choisi dans le groupe formé par le soja, le colza, le tournesol, les végétaux de la famille des Palmae et est, de préférence, de la cire de palme. Ainsi, la cire de palme commericalisée par la Société PT. SUMI AS 1H sous la référence SAW 2468 offre d'excellents résultats.

La cire de palme est obtenue par l'hydrogénation de l'huile de palme. Cette huile est extraite de la pulpe du fruit du palmier provenant des cultures raisonnées, durables et renouvelables. Le fruit est une drupe charnue de forme ovoïde. La pulpe ou mésocarpe de couleur jaune orangée renferme près de 50 % de lipides qui constituent l'huile de palme, mais le fruit possède également un noyau avec une amande qui pèse 1 à 6 grammes. Cette graine ou amande, appelée palmiste, est également riche en lipide et fournit de l'huile. Cette huile est sensible à l'oxydation, à la chaleur et à la lumière. En lui faisant subir une réaction chimique par addition d'hydrogène, (procédé d'hydrogénation à 200°C), on élève son point de fusion, ce qui la rend solide à température ambiante. Le produit final (solide) est ainsi moins cher et plus résistant qu'à l'état liquide. La cire de palme est donc un élément solide qui présente un point éclair suffisamment bas (de l'ordre de 62° C) permettant de travailler à froid pour limiter toute consommation énergétique résultant d'un chauffage. La cire de palme est par ailleurs digeste puisque largement utilisée pour la fabrication, par exemple, de pâtisseries industrielles.

De manière similaire, la cire des autres végétaux décrits ci-dessus est obtenue par hydrogénation des autres végétaux. Ainsi, la cire de tournesol est formée majoritairement d'huile hydrogénée de tournesol. Dans la composition, la cire peut être formée d'huile hydrogénée d'un végétal ou de plusieurs végétaux. Ainsi, la composition peut contenir par exemple de la cire de palme et de colza.

Le rapport pondéral entre la ou les résidus de plante(s) et la cire végétale dans ladite composition est compris dans la plage 30/70 à 70/30.

Généralement, la ou les plante(s) sont présentes dans la dite composition en une proportion exprimée en pourcentage en poids rapporté au poids total de la composition supérieure à celle de la cire végétale.

Dans l'exemple cité ci-dessus, où la composition contient au moins des morceaux de Miscanthus et de la cire de palme, les morceaux de Miscanthus représentent en pourcentage en poids, de préférence, au moins 55 % du poids total de la composition. Le mélange haché de Miscanthus avec de la cire de palme s'opère idéalement dans la proportion de 60 % en poids, de Miscanthus pour 40 % en poids de cire de palme.

De préférence, les morceaux de Miscanthus et la cire de palme sont les constituants exclusifs de ladite composition.

Le mélange des deux éléments solides se fait à l'aide d'un mélangeur ou malaxeur ou à la main lorsqu'il s'agit de fabriquer de petites quantités. Une fois le mélange opéré, il suffit de le comprimer à l'aide d'une presse pour obtenir la forme souhaitée. La composition finale peut se présenter sous forme de plaquette, de cylindre, de cube, de bûche ou autre.

De préférence, la composition combustible se présente sous forme de granulés de diamètre de préférence compris entre 3 et 25 mm, et de longueur de préférence comprise entre 1 et 5 cm.

A cet effet, on utilise donc, pour la compression, une machine servant à la formation de granulés, telle que les machines qui sont aujourd'hui utilisées pour la production d'aliments pour animaux ou dans l'industrie des granulés de chauffage.

Ainsi conformée en granulés, la composition est stable et suffisamment sèche après 2 à 3 minutes de repos, pour être conditionnée dans un simple sachet formé de papier kraft ou autre. L'association plante-cire, du fait de sa stabilité et de la non transpiration de la graisse offre l'intérêt non négligeable sur le plan écologique d'un conditionnement dans un emballage économique et rapide.

Il est également possible, une fois la composition conformée en granulés ou autre, de mélanger le produit conformé avec des ingrédients, tels que des sulfates de zinc, de cuivre... pour obtenir un produit à effet ramonant.

Il est également possible, une fois la composition conformée en granulés ou autre, pour une autre application, par exemple moule, litière... de l'utiliser comme combustible.

La propagation de la flamme sur les granulés est immédiate et rapide : 2 à 3 secondes. Le tas de granulés permet, par son fort rayonnement de chaleur, d'embraser un petit bois ou un charbon de bois de manière aisée. La formation d'un tas de granulés permet de laisser passer facilement l'air et une bonne oxygénation du feu. L'obtention de granulés à partir d'un haché et non de sciures permet de constater, au niveau des morceaux de plantes, un effet de mèche produisant de belles flammes avec un aspect de forge.

## Revendications

1. Composition combustible, en particulier pour l'allumage de matières combustibles, ladite composition comprenant au moins une plante herbacée à métabolisme photosynthétique en C₄ de la famille des Poaceae sous forme hachée,
**caractérisée en ce que** ladite composition comprend en outre au moins une cire végétale formée majoritairement de l'huile hydrogénée d'au moins un végétal.

2. Composition combustible selon la revendication 1,
**caractérisée en ce que** la cire végétale formée majoritairement de l'huile hydrogénée d'au moins un végétal et la ou les plante(s) herbacée(s) à métabolisme photosynthétique en C₄ de la famille des Poaceae représentent, exprimé en pourcentage en poids, rapporté au poids total de la composition, au moins 60 %, de préférence au moins 90 %, de ladite composition.

3. Composition combustible selon l'une des revendications 1 et 2,
**caractérisée en ce que** la ou les plantes herbacées à métabolisme photosynthétique en C₄ de la famille des Poaceae de ladite composition se présente(nt) sous forme de morceaux comportant un diamètre de préférence compris entre 0,5 et 10 mm et une longueur de préférence comprise entre 1 et 50 mm.

4. Composition combustible selon l'une des revendications 1 à 3,
**caractérisée en ce que** la cire végétale est formée majoritairement d'huile hydrogénée d'au moins un végétal choisi dans le groupe formé par le soja, le colza, le tournesol, les végétaux de la famille des Palmae et est, de préférence, de la cire de palme, formée majoritairement d'huile hydrogénée de palme.

5. Composition combustible selon l'une des revendications 1 à 4,
**caractérisée en ce que** le rapport pondéral entre la ou les plante(s) et la cire végétale dans ladite composition est compris dans la plage 30/70 à 70/30.

6. Composition combustible selon l'une des revendications 1 à 5,
**caractérisée en ce que** la ou les plante(s) sont présentes dans la dite composition en une proportion exprimée en pourcentage en poids rapporté au poids total de la composition supérieure à celle de la cire végétale.

7. Composition combustible selon l'une des revendications 1 à 6,
**caractérisée en ce qu'**elle se présente sous forme de granulés de diamètre de préférence compris entre 3 et 25 mm, et de longueur de préférence comprise entre 1 et 5 cm.

8. Composition combustible selon l'une des revendications 1 à 7,
**caractérisée en ce qu'**elle contient au moins des résidus de Miscanthus et de la cire de palme formée majoritairement d'huile hydrogénée de palme, les résidus de Miscanthus représentant, en pourcentage en poids, de préférence, au moins 55 % du poids total de la composition.

9. Allume-feu se présentant sous forme d'un corps solide,
**caractérisé en ce que** ledit corps comporte une composition conforme à l'une des revendications 1 à 8.

10. Procédé de fabrication d'une composition combustible conforme à l'une des revendications 1 à 8, notamment pour la réalisation d'un allume-feu conforme à la revendication 9,
**caractérisé en ce qu'**il comprend au moins une étape de mélange de plante(s) herbacée(s) à métabolisme photosynthétique en C₄ de la famille des Poaceae sous forme hachée avec au moins de la cire végétale formée majoritairement d'huile hydrogénée d'au moins un végétal et une étape de conformation par compression, de préférence sous forme de granulés, du mélange obtenu.
